# FASCICULE DE BREVET EUROPEEN

(11) **EP 0 578 608 B1**
(45) Date de publication et mention de la délivrance du brevet: **17.04.1996**
(21) Numéro de dépôt: 93810450.2
(22) Date de dépôt: 24.06.1993
(51) Int. Cl.: B23Q 3/08, F25D 19/00

(54) **Procédé de fixation de pièces par congélation et dispositif pour la mise en oeuvre du procédé**
Verfahren und Vorrichtung zum Werkstückhalten durch Einfrieren
Method and device for holding work by freezing

(30) Priorité: 02.07.1992 CH 2093/92
(43) Date de publication de la demande: 12.01.1994
(73) Titulaire: Société Anonyme de la Manufacture d'Horlogerie AUDEMARS PIGUET ET CIE, CH-1348 Le Brassus (CH)
(72) Inventeur: Charton, Henri, CH-1348 Le Brassus (CH)
(74) Mandataire: Meylan, Robert Maurice

(56) Documents cités:
- DE-A- 2 808 837
- US-A- 2 641 879
- US-A- 3 807 188
- US-A- 3 834 687
- US-A- 4 068 412
- US-A- 4 091 580

## Description

La présente invention a pour objet un procédé de fixation de pièces sur un support par congélation en vue de leur usinage, selon lequel on refroidit le support en dessous de la température de congélation d'un liquide, le support ou les pièces à fixer ayant été préalablement mouillé avec ce liquide, de telle manière que les pièces adhèrent au support par congélation dudit liquide. L'invention concerne aussi un dispositif pour la mise en oeuvre dudit procédé.

Un tel procédé est décrit, par exemple, dans les brevets US 2 937 437, DE 23 63 882, DD 49 755 et CH 671 540. Le liquide de fixation est généralement de l'eau, de préférence de l'eau distillée. Le refroidissement du support s'effectue, soit par la circulation d'un liquide de refroidissement, soit électriquement au moyen d'éléments Peltier. Du document US 4 091 580, on connaît également un procédé de découpage de feuilles de verre, selon lequel la feuille de verre est fixée par congélation sur un support placé sur de la glace pilée.

Ce procédé permet de fixer les pièces à usiner sans contrainte des moyens mécaniques de serrage. Pour le contournage de pièces de formes très diverses, exécutées en petites séries et devant être découpées par fraisage, comme on le rencontre dans la construction aéronautique et spatiale, la fixation par congélation s'avère être la seule solution permettant de découper plusieurs pièces dans une même tôle de métal léger, le problème étant de maintenir la tôle de base et d'immobiliser les pièces même après qu'elles soient détachées sur tout leur pourtour.

Toutefois, le procédé de fixation par congélation, dans sa mise en oeuvre actuelle, présente un inconvénient majeur. Les tôles à découper, en raison de leurs dimensions relativement grandes, présentent une inertie thermique importante, de telle sorte que le temps nécessaire pour libérer la tôle et les pièces découpées, c'est-à-dire le temps de dégel, est important et ralentit considérablement le processus de fabrication. Le même problème existe, dans une moindre mesure, pour des pièces de petites dimensions.

La présente invention a pour but d'obvier à cet inconvénient du procédé de fixation par congélation.

Le procédé selon l'invention, comme défini dans la revendication 1, est caractérisé en ce qu'on fixe d'abord un support auxiliaire thermoconducteur sur le support principal, en ayant préalablement déposé un film de liquide antigel sur le support principal ou sur une face du support auxiliaire en contact avec le support principal, et qu'on fixe ensuite la ou les pièces à usiner par congélation sur le support auxiliaire en refroidissant le support principal.

La fixation du support auxiliaire sur le support principal peut être assurée par vacuum, magnétisme ou tout bridage mécanique.

Le support principal est bien entendu refroidi à une température supérieure à la température de congélation de l'antigel, de telle sorte que le support auxiliaire est maintenu sur le support principal exclusivement par vacuum, magnétisme ou bridage mécanique.

Contrairement à ce qu'on pouvait attendre, le film d'antigel n'a pas d'effet isolant thermique, mais au contraire améliore la conduction thermique en créant un pont thermique entre le support principal et le support auxiliaire. Ceci peut s'expliquer par le fait que deux surfaces planes métalliques ne se touchent vraiment qu'en trois points et que le film d'antigel présente une meilleure conduction thermique que l'air. On prévoit de préférence des rainures dans la surface du support principal de telle manière que le liquide anti-gel soumis à la pression du support auxiliaire sur le support principal peut être en partie évacué dans ces rainures, de telle sorte que le film subsistant est très mince, mais suffisant pour empêcher à coup sûr la fixation du support auxiliaire au support principal par congélation de la vapeur d'eau, notamment lors de la suppression du vacuum.

La suppression du vacuum de la fixation magnétique ou autre, libère instantanément le support auxiliaire, sans qu'il soit nécessaire de réchauffer le support principal. On a ainsi supprimé le temps de dégel qui s'ajouterait normalement au temps du cycle d'usinage sur la machine-outil.

Le temps de refroidissement, c'est-à-dire de gel, est également supprimé en ce qui concerne la durée du processus d'usinage, qu'il se fasse sur une seule machine ou sur plusieurs machines successivement, car la fixation des pièces à usiner par congélation sur le support auxiliaire peut se faire en utilisant le temps masqué du processus, c'est-à-dire en fixant ces pièces par congélation sur un support auxiliaire placé sur une plaque externe, par le procédé selon l'invention.

Le support auxiliaire, réalisé sous la forme d'une palette, peut être utilisé comme support de transfert d'un poste d'usinage à un autre poste d'usinage ou à un poste de déchargement. A cet effet, il suffit que l'inertie thermique, c'est-à-dire la chaleur massique, du support auxiliaire soit suffisante pour maintenir la température de la palette à une température inférieure ou égale à la température de congélation (en principe 0°C).

L'invention a également pour objet un dispositif pour la mise en oeuvre du procédé selon l'invention, comprenant un support plan en matériau thermoconducteur muni de moyens de refroidissement, un support auxiliaire constitué d'une palette, la surface plane du support principal présentant une gorge dans laquelle est logée une garniture d'étanchéité délimitant une zone à évacuer, un conduit débouchant dans cette zone et destiné à être relié à une source de vacuum.

Le dessin annexé représente, à titre d'exemple, deux formes d'exécution de dispositifs pour la mise en oeuvre du procédé selon l'invention.

La figure 1 est une vue en élévation d'un étau-gel fixe.

La figure 2 est une vue en coupe axiale d'un étau-gel rotatif.

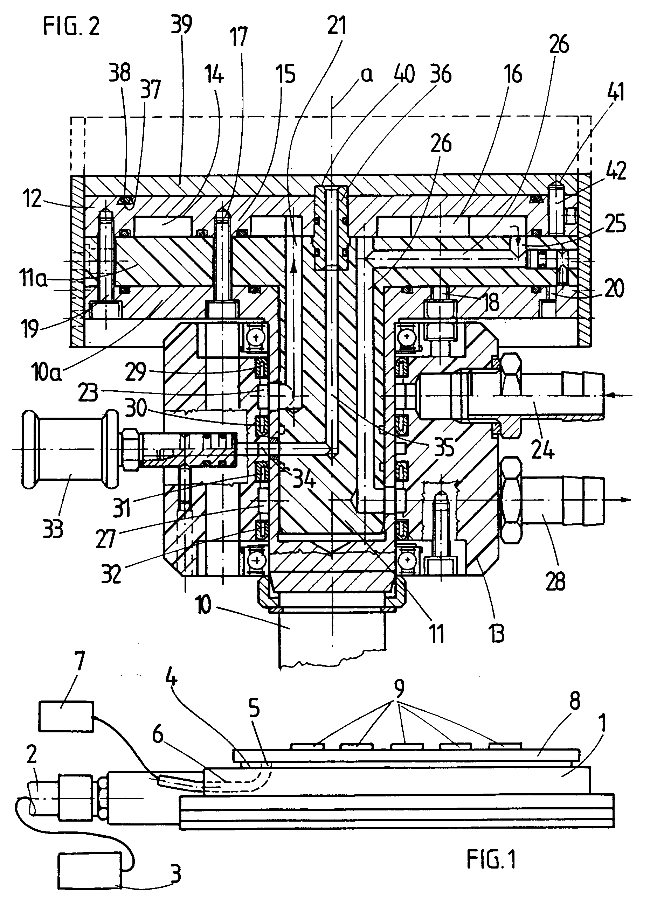

L'étau-gel représenté à la figure 1 est de conception connue en ce qui concerne ses moyens de refroidissement. Il comprend un corps 1 muni de canaux reliés à un double conduit 2 relié à une installation de refroidissement 3. Dans ce double conduit 2 circule, de manière connue, un liquide refroidissement pour le refroidissement du corps 1. Sur le corps 1 est fixé une plaque de cuivre 4 en étroit contact thermique avec le corps 1. Cette plaque de cuivre 4 est percée d'un trou 5 relié à un conduit 6 lui-même relié à une pompe 7. Sur la plaque de cuivre 4, on dépose un film d'antigel tel que de l'ANTIFROGEN (marque déposée). Sur la plaque 4 on pose une plaque ou palette métallique 8, de préférence en aluminium, en raison de sa bonne conductivité thermique. On fixe ensuite la palette 8 sur la plaque 4 par évacuation de l'air entre ces deux pièces au moyen de la pompe 7. On pose ensuite les pièces à usiner 9 sur la palette 8. Si le corps 1 n'est pas déjà refroidi, on refroidit celui-ci de manière à fixer les pièces 9 sur la palette 8 par congélation. La libération de la palette 8 s'effectue simplement en supprimant le vacuum entre cette palette et la plaque de cuivre 4.

L'étau-gel représenté à la figure 1 peut être utilisé, soit comme support d'usinage sur une machine-outil, soit comme dispositif de fixation des pièces 9 sur la palette 8, cette palette étant ensuite transférée sur un étau-gel analogue monté à un poste d'usinage.

La figure 2 représente un étau-gel rotatif de forme générale circulaire destiné à supporter des pièces à usiner sur un tour ou sur un plateau tournant.

Cet étau-gel comprend un arbre en inox 10 creux sur la plus grande partie de sa longueur et muni d'un flasque 10a. Dans cet arbre 10 est fixé un corps en matière synthétique 11 présentant également un flasque 11a venant s'appliquer sur le flasque 10a. Sur le flasque 11a est monté un disque 12 en cuivre. L'arbre 10 est monté rotativement dans un manchon fixe 13 en matière synthétique.

Le disque 12 présente sur sa face inférieure une creusure 14 contenant un certain nombre d'ilots, tels que 15 et 16 pour la fixation du disque au moyen de vis telles que 17 et 18, le disque 12 étant en outre fixé à sa périphérie par un certain nombre de vis telles que 19 et 20. La creusure 14 est fermée par le flasque 11a et constitue une chambre de refroidissement du disque 12. La chambre 14 communique avec cinq canaux, tels que 21, parallèles à l'axe a, canaux ménagés dans le corps 11. Ces cinq canaux communiquent, à travers la paroi de l'arbre creux 10 avec une chambre annulaire 23 du manchon 13 dans laquelle débouche une tubulure 24 qui constitue l'entrée du liquide refroidissement. Le liquide de refroidissement ressort de la chambre 14 par cinq trous, tels que le trou 25, répartis circulairement sur le flasque 11a et communiquant chacun avec un conduit 26, ces conduits 26 débouchant dans une chambre annulaire 27 du manchon isolant 13 communiquant avec la sortie 28 du liquide de refroidissement. L'étanchéité des chambres 23 et 27 est assurée par des joints tournants 29, 30, 31, 32.

Le manchon 13 est également pourvu d'une entrée 33 reliée à une pompe analogue à la pompe 7 de la figure 1. L'entrée 33 communique avec une chambre annulaire 34 ménagée dans la paroi intérieure du manchon 13, cette chambre 34 communiquant avec un conduit axial 35 du corps 11. Le conduit 35 se prolonge dans une pièce cylindrique 36 dépassant la surface du disque de cuivre 12 et constituant un centreur. Des garnitures d'étanchéité sont prévues partout où cela est nécessaire.

La face supérieure du disque 12 présente une gorge circulaire 37 dans laquelle est logée une garniture d'étanchéité 38.

Le disque 12 est destiné à recevoir un disque 39 en aluminium constituant une palette ou un posage pour la pièce à usiner. Ce disque 39 présente un logement circulaire central 40 dans lequel vient se loger le centreur 36 de l'étau-gel. Dans le cas particulier, le disque 39 présente en outre près de son bord un trou borgne 41 dans lequel vient s'introduire une goupille d'indexage 42 destinée à fixer la position angulaire du disque 39.

L'étau-gel s'utilise de la même façon que l'étau-gel de la figure 1. Le disque 12 est revêtu d'un film d'antigel avant la mise en place du disque 39. Le disque 39 est fixé par vacuum par évacuation de l'air à travers le centreur 36, la garniture 38 assurant l'étanchéité du volume évacué.

La surface du disque 12 présente en outre de préférence des rainures pour l'évacuation du surplus d'antigel lors de la mise sous vide.

La plaque de cuivre 4 du dispositif selon la figure 1 présente également une gorge et une garniture d'étanchéité.

Que l'étau-gel soit fixe ou rotatif, le refroidissement pourrait également être obtenu au moyen d'éléments Peltier.

Le support auxiliaire pourrait être fixé sur l'étau-gel par d'autres moyens, par exemple, par magnétisme ou par tout bridage mécanique.

## Revendications

1. Procédé de fixation de pièces sur un support par congélation en vue de leur usinage, selon lequel on refroidit le support en dessous de la température de congélation d'un liquide, le support ou les pièces à fixer ayant été préalablement mouillé avec ce liquide, de telle manière que les pièces adhérent au support par congélation dudit liquide, caractérisé en ce qu'on fixe d'abord un support auxiliaire thermoconducteur sur le support principal, en ayant déposé préalablement un film de liquide antigel sur le support principal ou sur une face du support auxiliaire en contact avec le support principal, et qu'on fixe ensuite la ou les pièces à usiner par congélation sur le support auxiliaire en refroidissant le support principal.

2. Procédé de fixation selon la revendication 1 en vue de l'usinage successif de pièces à au moins un poste d'usinage, caractérisé en ce qu'on fixe les pièces à usiner sur un support auxiliaire au moyen d'un étau-gel auxiliaire et qu'on transfère le support auxiliaire refroidi portant les pièces à usiner sur un étau-gel du poste d'usinage maintenu refroidi de manière continue et sur lequel le support auxiliaire est fixé.

3. Procédé de fixation selon la revendication 2 appliqué à l'usinage de pièces à plusieurs postes d'usinage successivement, caractérisé en ce que chaque poste d'usinage comprend un étau-gel maintenu refroidi de manière continue.

4. Procédé de fixation selon l'une des revendications 1 à 3, caractérisé en ce qu'on fixe le support auxiliaire sur le support principal par vacuum.

5. Dispositif pour la mise en oeuvre du procédé selon la revendication 4, comprenant un support plan (4; 12) en matériau thermoconducteur muni de moyens de refroidissement (2, 3; 14, 24, 28), caractérisé par le fait qu'il comprend un support auxiliaire constitué d'une palette (8; 39) et que la surface plane du support principal (4; 12) présente une gorge (37) dans laquelle est logée une garniture d'étanchéité (38) délimitant une zone à évacuer, un conduit débouchant dans cette zone et destiné à être relié à une source de vacuum (7).

6. Dispositif selon la revendication 5, caractérisé par le fait que le support principal (12) est monté rotativement.

7. Dispositif selon la revendication 6, caractérisé par le fait que le support est muni d'un centreur (36).

8. Dispositif selon la revendication 7, caractérisé par le fait que le conduit d'évacuation de l'air traverse axialement le centreur.

## Claims

1. Method for fixing pieces onto a support by freezing for the purpose of machining them, according to which method the support is cooled to below the freezing temperature of a liquid, the support or the pieces to be fixed having previously been wetted with this liquid, so that the pieces adhere to the support by freezing of the said liquid, characterised in that a thermally conducting auxiliary support is firstly fixed to the main support, by having previously laid down a film of antifreeze liquid on the main support or on one face of the auxiliary support in contact with the main support, and in that the piece or pieces to be machined is or are fixed by freezing onto the auxiliary support by cooling the main support.

2. Fixing method according to Claim 1 for the purpose of successively machining pieces at at least one machining station, characterised in that the pieces to be machined are fixed onto an auxiliary support by means of an auxiliary freeze vice and in that the cooled auxiliary support carrying the pieces to be machined is transferred onto a freeze vice of the machining station kept cooled continuously and on which the auxiliary support is fixed.

3. Fixing method according to Claim 2 applied to the machining of pieces at several machining stations in succession, characterised in that each machining station comprises a freeze vice kept cool continuously.

4. Fixing method according to one of Claims 1 to 3, characterised in that the auxiliary support is fixed onto the main support by vacuum.

5. Device for implementing the method according to Claim 4, comprising a plane support (4; 12) made from thermally conducting material provided with cooling means (2, 3; 14, 24, 28), characterised in that it comprises an auxiliary support made up of a pallet (8; 39) and in that the plane surface of the main support (4; 12) has a groove (37) in which there is housed a seal (38) delimiting a zone to be evacuated, a duct opening out into this zone and intended to be connected to a vacuum source (7).

6. Device according to Claim 5, characterised in that the main support (12) is mounted so as to rotate.

7. Device according to Claim 6, characterised in that the support is fitted with a centring device (36).

8. Device according to Claim 7, characterised in that the duct for evacuating air passes axially through the centring device.

## Patentansprüche

1. Verfahren zur Befestigung von Werkstücken auf einem Träger durch Einfrieren, um diese Werkstücke bearbeiten zu können, wonach der Träger unter der Gefriertemperatur einer Flüssigkeit abgekühlt wird, mit welcher der Träger oder die zu befestigenden Teile zuvor genässt wurden, so dass die Werkstücke durch Einfrieren der genannten Flüssigkeit am Träger haften, dadurch gekennzeichnet, dass zuerst ein wärmeleitender Hilfsträger auf dem Hauptträger befestigt wird, wobei der Hauptträger und die mit dem Hauptträger in Kontakt stehende Seite des Hilfsträgers zuvor mit einem Gefrierschutzflüssigkeitsfilm versehen wurden, und dass dann das zu bearbeitende Werkstück oder die zu bearbeitenden Werkstücke durch Einfrieren auf dem Hilfsträger befestigt werden, indem der Hauptträger abgekühlt wird.

2. Befestigungsverfahren nach Anspruch 1, um Werkstücke nacheinander an mindestens einem Bearbeitungsposten zu bearbeiten, dadurch gekennzeichnet, dass die zu bearbeitenden Werkstücke mittels einer Hilfseinfrierplatte auf dem Hilfsträger befestigt werden und dass der abgekühlte, die zu bearbeitenden Werkstücke tragende Hilfsträger auf eine Einfrierplatte des Bearbeitungspostens übertragen wird, welche kontinuierlich gekühlt gehalten wird und auf welcher der Hilfsträger befestigt wird.

3. Befestigungsverfahren nach Anspruch 2, welches bei der Bearbeitung von Werkstücken auf mehrere aufeinanderfolgende Bearbeitungsposten angewendet wird dadurch gekennzeichnet, dass jeder Bearbeitungsposten eine Einfrierplatte aufweist, welche kontinuierlich gekühlt gehalten wird.

4. Befestigungsverfahren nach einem der Ansprüche 1 bis 3, dadurch gekennzeichnet, dass der Hilfsträger auf dem Hauptträger durch Vakuum befestigt wird.

5. Vorrichtung zur Ausführung des Verfahrens nach Anspruch 4 mit einem ebenen Träger (4; 12) aus wärmeleitendem Material und mit Kühlmittel (2, 3; 14, 24, 28), dadurch gekennzeichnet, dass sie einen Hilfsträger aufweist, welcher aus einer Palette (8, 39) besteht, und dass die ebene Oberfläche des Hauptträgers (4; 12) eine Rinne (37) aufweist, in welcher eine Dichtung (38) angeordnet ist, die die auszupumpende Zone abgrenzt, wobei eine Leitung, die dazu vorgesehen ist, mit einer Vakuumquelle (7) verbunden zu werden, in diese Zone mündet.

6. Vorrichtung nach Anspruch 5, dadurch gekennzeichnet, dass der Hauptträger (12) drehend montiert ist.

7. Vorrichtung nach Anspruch 6, dadurch gekennzeichnet, dass der Hauptträger mit einem Zentrierzapfen (36) versehen ist.

8. Vorrichtung nach Anspruch 7, dadurch gekennzeichnet, dass die Leitung zum Luftauspumpen den Zentrierzapfen axial durchquert.
